# EUROPÄISCHE PATENTSCHRIFT

(11) **EP 3 012 448 B1**
(45) Veröffentlichungstag und Bekanntmachung des Hinweises auf die Patenterteilung: **26.02.2025**
(21) Anmeldenummer: 15002515.3
(22) Anmeldetag: 25.08.2015
(51) Int. Cl.: F02N 15/00, F02N 11/04, F02N 19/00

(54) **VERFAHREN UND VORRICHTUNG ZUM EINSTELLEN EINER BESTIMMTEN WINKELPOSITION EINER KURBELWELLE EINES KRAFTFAHRZEUGS IM RAHMEN VON WARTUNGS- ODER MONTAGEARBEITEN**
METHOD AND DEVICE FOR ADJUSTING A CERTAIN ANGULAR POSITION OF A CRANKSHAFT OF A MOTOR VEHICLE IN THE CONTEXT OF MAINTENANCE OR ASSEMBLY WORK
PROCEDE ET DISPOSITIF DE REGLAGE D'UNE POSITION ANGULAIRE DEFINIE D'UN VILEBREQUIN D'UN VEHICULE AUTOMOBILE DANS LE CADRE DE TRAVAUX D'ENTRETIEN OU DE MONTAGE

(30) Priorität: 22.10.2014 DE 102014015670
(43) Veröffentlichungstag der Anmeldung: 27.04.2016
(73) Patentinhaber: MAN Truck & Bus SE, 80995 München (DE)
(72) Erfinder: Golka, Markus, 90402 Nürnberg (DE)
(74) Vertreter: v. Bezold & Partner Patentanwälte - PartG mbB

(56) Entgegenhaltungen:
- EP-A1- 1 321 666
- EP-A2- 1 748 180
- DE-A1- 10 049 193
- FR-A1- 2 805 571
- US-A- 4 825 167

## Beschreibung

Die Erfindung betrifft ein Verfahren und eine Vorrichtung zum Einstellen einer bestimmten Winkelposition einer Kurbelwelle eines Kraftfahrzeugs im Rahmen von Wartungs- oder Montagearbeiten.

Aus der Praxis ist bekannt, dass es im Rahmen von Wartungs- oder Montagearbeiten erforderlich sein kann, eine bestimmte Winkelposition der Kurbelwelle eines Kraftfahrzeugs bei angebautem Schwungradgehäuse einzustellen. Beispiele für solche Wartungs- oder Montagearbeiten sind beispielsweise das Einstellen des Ventilspiels, die genaue Einstellung des Einspritzzeitpunktes in Abhängigkeit von der oberen Totpunktlage (OT) eines Kolbens oder die Zylinderkopfmontage, bei der ein oberer Totpunkt der Kurbelwelle angefahren wird.

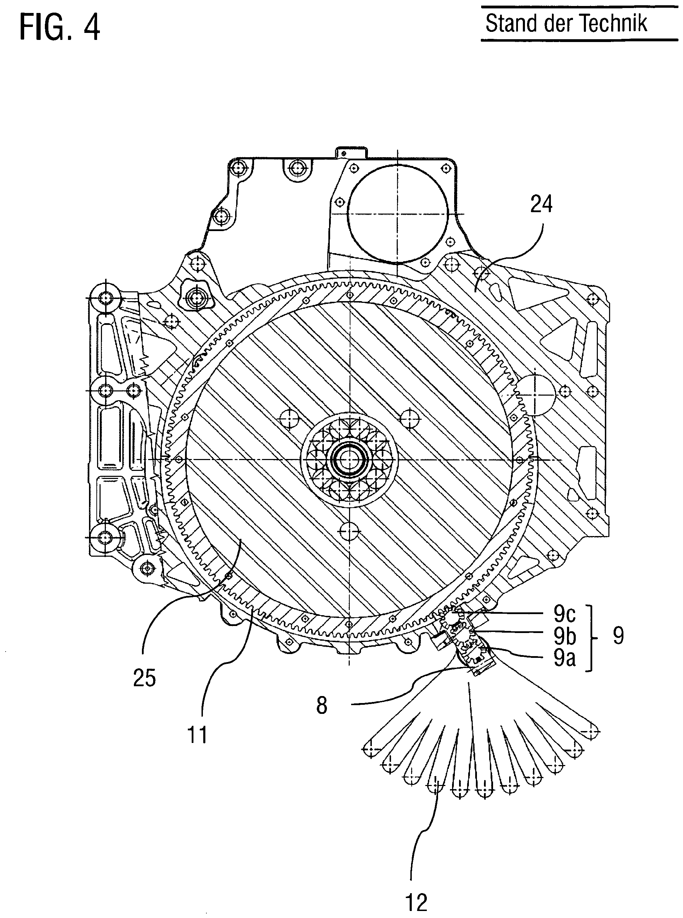

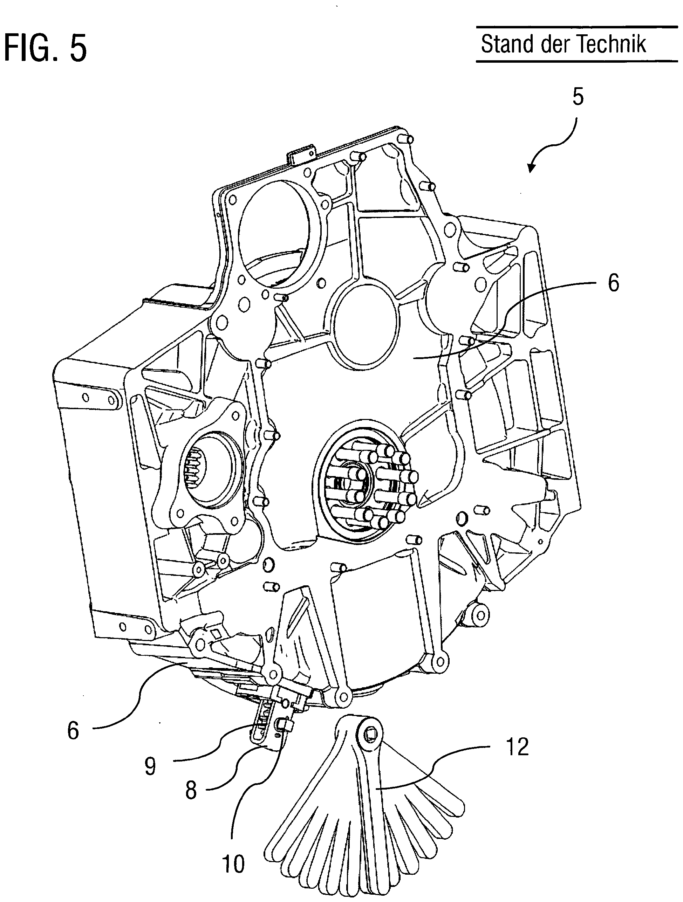

Aus dem Stand der Technik sind hierzu Vorrichtungen zum Durchdrehen einer Hubkolben-Brennkraftmaschine von Hand und zum Einstellen einer bestimmten Winkelposition der Kurbelwelle am Schwungrad bekannt. Die Verwendung einer solchen aus dem Stand der Technik bekannten manuellen Durchdrehvorrichtung 8 für eine Brennkraftmaschine ist in den Figuren 4 und 5 dargestellt.

Die Durchdrehvorrichtung 8 ist in einem Schauloch eines Schwungradgehäuses 6 festlegbar. In dieser Stellung greift eine Zahnradanordnung 9, vorliegend bestehend aus den drei Zahnrädern 9a, 9b und 9c, in den auf dem Schwungrad 25 drehfest befestigten Anlasserzahnkranz 11 ein, wobei das getriebene Zahnrad 9a mittels eines Werkzeugs 12, z. B. eines Schraubenschlüssels, gedreht werden kann. Hierzu ist eine Werkzeugangriffsstelle 10, z. B. in Form eines Mehrkants, an der Durchdrehvorrichtung 8 vorgesehen. Die in den Figuren 4 und 5 gefächerte Darstellung des Werkzeugs 12 soll lediglich die verschiedenen Verdrehstellungen des Werkzeugs 12 darstellen.

Das aufgebrachte Drehmoment wird auf die Kurbelwelle übertragen, wodurch eine bestimmte Winkelposition, d. h. Drehstellung, der Kurbelwelle eingestellt werden kann. Hierzu kann ein Mechaniker durch manuelles Verdrehen der Schwungrades 25 mittels der Durchdrehvorrichtung 8 dieses soweit verdrehen, bis eine durch das Schauloch sichtbare Markierung am Schwungrad 25 eine Markierung am Schwungradgehäuse 6, z. B. in Form einer bearbeiteten Fläche, erreicht. Die Markierungen sind so festgelegt, dass die Verdrehstellung bzw. Winkelposition des Schwungrades einer vorbestimmten Verdrehstellung bzw. Winkelposition der Kurbelwelle entspricht.

Für die Einstellung einer bestimmten Winkelposition der Kurbelwelle mittels einer derartigen Durchdrehvorrichtung 8 muss ein gewisser Bauraum freigehalten werden, um die Zugänglichkeit für die Durchdrehvorrichtung 8 zu ermöglichen. Ein weiterer Nachteil ist, dass die Einstellung einer bestimmten Position der Kurbelwelle für den Mechaniker umständlich ist, da besonders im Servicefall die Handhabung der Durchdrehvorrichtung in einer Grube schwer fällt. Ferner ist der Durchdrehvorgang aufgrund des geringen Übersetzungsverhältnisses von Durchdrehvorrichtung 8 zu Anlasserzahnkranz 11 zeitaufwändig. Nachteilig ist insbesondere auch, dass durch das manuelle Ablesen der Winkelposition über eine bearbeitete Fläche am Schwungradgehäuse 6 und der Markierung am Schwungrad 25 Fehler durch Parallaxe entstehen können.

Aus der DE 100 49 193 A1 ist ein Verfahren zum mobilen Prüfen von Aggregaten, insbesondere von Kraftfahrzeugmotoren und -getrieben bekannt. Hierbei weist das Aggregat eine drehbar antreibbare Welle auf, die an einen Startergenerator gekoppelt werden kann. Hierbei erfolgt während der Prüfung bzw. Einstellung der Antrieb des Aggregats mit Hilfe des Startergenerators, während die Steuerung des Prüf- und Einstellvorgangs mit Hilfe eines in die Transportpalette integrierten Prüf- und Einstellsystems durchgeführt wird. Ein Anfahren einer bestimmten Winkelposition der Kurbelwelle mit Hilfe des Kurbelwellenstartergenerators ist jedoch hiermit nicht möglich.

Es ist somit eine Aufgabe der Erfindung, eine verbesserte Möglichkeit zum Einstellen einer bestimmten Winkelposition einer Kurbelwelle eines Kraftfahrzeugs im Rahmen von Wartungs- oder Montagearbeiten bereitzustellen, mit der Nachteile herkömmlicher Techniken vermieden werden können. Die Aufgabe der Erfindung ist es insbesondere, eine verbesserte Möglichkeit zum Einstellen einer bestimmten Winkelposition einer Kurbelwelle eines Kraftfahrzeugs bereitzustellen, die sich durch eine vereinfachte und weniger fehleranfällige Verfahrensführung auszeichnet.

Diese Aufgaben werden durch eine Vorrichtung und ein Verfahren gemäß der unabhängigen Ansprüche gelöst. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß allgemeinen Gesichtspunkten der Erfindung werden die genannten Aufgaben durch eine Vorrichtung zum Einstellen einer bestimmten Winkelposition einer Kurbelwelle eines Kraftfahrzeugs im Rahmen von Wartungs- oder Montagearbeiten gelöst, umfassend einen Kurbelwellenstartergenerator und eine Steuerung des Kurbelwellenstartergenerators, wobei die Steuerung eingerichtet ist, den Kurbelwellenstartergenerator so anzusteuern, dass ein Rotor des Kurbelwellenstartergenerators eine Verdrehstellung einnimmt, die wenigstens einer vorbestimmten Winkelposition der Kurbelwelle entspricht.

Der Erfindung liegt die Tatsache zu Grunde, dass in der Praxis zunehmend Antriebsstrangmodule eingesetzt werden, bei denen eine motorisch als auch generatorisch betreibbare elektrische Maschine in Form eines elektrischen Kurbelwellenstartergenerators (KSG), beispielsweise koaxial zur Kurbelwelle und zwischen Motor und Getriebe angeordnet, vorgesehen ist. Hierbei steht der KSG in Wirkverbindung mit der Kurbelwelle, beispielsweise indem der Rotor des KSGs im montierten Zustand mit einem auf der Kurbelwelle angeordneten Schwungrad drehfest in Verbindung steht.

Erfindungsgemäß erfolgt somit das Einstellen der Winkelposition der Kurbelwelle mittels des Kurbelwellenstartergenerators, dessen Steuerung hierzu programmtechnisch entsprechend eingerichtet ist. Neben den bisher gängigen Betriebsmodi, in denen der KSG motorisch zum Starten der Brennkraftmaschine und/oder zum Bereitstellen eines zusätzlichen Antriebsmoments und/oder generatorisch zur Aufnahme und Umwandlung von Rekuperationsenergie genutzt wird, ist die Steuerung insbesondere eingerichtet, den KSG in einem Betriebsmodus für Wartungs- oder Montagearbeiten, d. h. nicht im Fahrbetrieb, zum Einstellen wenigstens einer gewünschten Winkelposition der Kurbelwelle anzusteuern. Ein Beispiel für eine solche vorbestimmte Winkelposition der Kurbelwelle ist der obere Totpunkt (OT).

Dies bietet den Vorteil, dass die Notwendigkeit für eine zusätzliche manuelle Durchdrehvorrichtung sowie für das Anbringen entsprechender visueller Markierungen am Schwungrad und Schwungradgehäuse entfällt, wodurch sich Kostenvorteile ergeben. Das Anfahren und Einstellen einer gewünschten Winkelposition der Kurbelwelle mittels KSG ist schneller als das Ansetzen und die manuelle Betätigung der bisher bekannten Durchdrehvorrichtungen. Ein KSG weist systembedingt eine hohe Winkelgenauigkeit von ca. 0,1° und kein Toleranzspiel auf, so dass die Einstellung mittels KSG daher auch genauer und weniger fehleranfällig ist. Da das Einstellen der Kurbelwellenwinkelpositionen über die KSG-Steuerung elektronisch gesteuert wird, besteht ferner die Möglichkeit, im Servicefall automatisch zu dokumentieren, dass alle relevanten Positionen der Kurbelwelle in einer vorgegebenen Genauigkeit angefahren wurden.

Der KSG kann zum Einstellen mehrerer bestimmter Winkelpositionen der Kurbelwelle im Rahmen von Wartungs- oder Montagearbeiten verwendet werden. In der Steuerung können hierzu mehrere vorbestimmte Verdrehpositionen des Rotors hinterlegt sein, die jeweils einer von mehreren vorbestimmten Winkelpositionen der Kurbelwelle entsprechen. Die Steuerung kann beispielsweise eingerichtet sein, wahlweise eine bestimmte dieser mehreren Verdrehpositionen des Rotors einzustellen oder alle nacheinander einzustellen.

Erfindungsgemäß umfasst die Vorrichtung ferner ein handbetätigtes Steuerelement, vorzugsweise als Druckknopf oder Drehknopf ausgebildet, das über eine Signalleitung oder drahtlos mit der Steuerung verbunden ist und mit dem das Einstellen der Winkelposition der Kurbelwelle mittels der Steuerung und des Kurbelwellenstartergenerators gestartet und/oder beendet werden kann. Das handbetätigte Steuerelement ist vorzugsweise ausschließlich zum Einstellen der bestimmten Winkelposition einer Kurbelwelle eines Kraftfahrzeugs im Rahmen von Wartungs- oder Montagearbeiten nutzbar und kann im Fahrerhaus, am oder in der Nähe des Antriebsstrangs oder an einer anderen für Service- oder Montagearbeiten vorteilhaften Stelle am Fahrzeug angeordnet sein. Dies ermöglicht eine einfache Handhabung.

Erfindungsgemäß ist die Steuerung eingerichtet, bei einem Gedrückthalten des Steuerelements eine Drehbewegung des Rotors des KSGs zu erzeugen, solange das handbetätigte Steuerelement gedrückt ist, und bei einem einmaligen kurzen Drücken des handbetätigten Steuerelements den Rotor automatisch in eine vorbestimmte Verdrehposition zu verfahren, die der vorbestimmten Winkelposition der Kurbelwelle entspricht. Das Steuerelement ist hierbei vorzugsweise als Knopf ausgeführt. Dadurch kann eine Bedienperson auf einfache Weise wahlweise selbst mittels des KSGs durch Gedrückthalten und nachfolgendes Loslassen des Steuerelements eine bestimmte Verdrehposition anfahren oder diese durch kurzes Drücken automatisiert anfahren lassen.

Die Steuerung kann ferner eingerichtet sein, den Rotor zum Einstellen der vorbestimmten Winkelposition mit einer Drehzahl zu bewegen, die kleiner als 10 U/min ist. Die Steuerung bewirkt somit im erfindungsgemäßen Betriebsmodus zur Einstellung einer Winkelposition der Kurbelwelle eine im Vergleich zum normalen KSG-Betrieb langsame Rotation des KSG-Rotors, die auch nicht mit ansteigender Drehzahl, sondern vorzugsweise mit einer konstanten Drehzahl erfolgt.

Eine weitere Möglichkeit der erfindungsgemäßen Realisierung sieht vor, dass der Rotor zum Einstellen der vorbestimmten Winkelposition durch die Steuerung in beide Drehrichtungen drehbar ist, wobei die Steuerung vorzugsweise ferner eingerichtet ist, jeweils diejenige Drehrichtung auszuwählen, die den kürzesten Verdrehweg des Rotors zum Einstellen der vorbestimmten Winkelposition erfordert. Dadurch kann die durchschnittliche Anfahrzeit der vorbestimmten Winkelposition der Kurbelwelle verkürzt werden.

Wie vorstehend ausgeführt, ist die Steuerung des KSGs programmtechnisch eingerichtet, den Kurbelwellenstartergenerator so anzusteuern, dass ein Rotor des Kurbelwellenstartergenerators eine Verdrehstellung einnimmt, die wenigstens einer vorbestimmten Winkelposition der Kurbelwelle entspricht.

Eine Möglichkeit, die Steuerung zum Einstellen der vorbestimmten Winkelposition einzurichten, ist, fortlaufend eine aktuelle Verdrehstellung des Rotors zum Stator des Kurbelwellenstartergenerators mittels eines an sich aus dem Stand der Technik bekannten Lagegebers zu ermitteln. Aus der Praxis ist beispielsweise bekannt, die Erfassung der Verdrehstellung von Rotor zu Stator z. B. mittels eines zusätzlichen becherförmigen oder topfförmigen Bauteils zu realisieren, das drehfest am Schwungrad befestigt ist. Auf dem Bauteil ist eine spezielle Geometrie oder Markierung (Geberspur) angebracht, die mittels eines induktiv oder kapazitiv arbeitenden Sensors des Lagegebers abgegriffen wird, um die Position des Rotors zu bestimmen. Die Steuerung kann gemäß dieser Variante ferner eingerichtet sein, in Abhängigkeit von der aktuellen Verdrehstellung des Rotors eine erforderliche Drehung des Rotors zu bestimmen, mittels der der Rotor ausgehend von der aktuellen Verdrehstellung eine vorbestimmte Verdrehpositionen des Rotors, die der vorbestimmten Winkelpositionen der Kurbelwelle entspricht, erreicht. Anschließend gibt die Steuerung ein Stellsignal an den Rotor aus, damit dieser sich so lange dreht, bis die berechnete Drehung erreicht ist.

Die Erfindung betrifft ferner ein Kraftfahrzeug, vorzugsweise ein Nutzfahrzeug, mit einer Vorrichtung zum Einstellen einer bestimmten Winkelposition einer Kurbelwelle wie hierin offenbart.

Gemäß allgemeinen Gesichtspunkten der Erfindung wird ferner ein Verfahren zum Einstellen einer bestimmten Winkelposition einer Kurbelwelle eines Kraftfahrzeugs im Rahmen von Wartungs- oder Montagearbeiten vorgeschlagen, wobei das Kraftfahrzeug einen Kurbelwellenstartergenerator umfasst, dessen Rotor mit einem auf der Kurbelwelle angeordneten Schwungrad drehfest in Verbindung steht, wobei das Verfahren dadurch gekennzeichnet ist, dass das Einstellen der Winkelposition der Kurbelwelle mittels des Kurbelwellenstartergenerators erfolgt.

Zur Vermeidung von Wiederholungen sollen rein vorrichtungsgemäß offenbarte Merkmale auch als verfahrensgemäß offenbart gelten und beanspruchbar sein. Die vorgenannten Aspekte und erfindungsgemäßen Merkmale, insbesondere betreffend die programmtechnische Einrichtung der Steuerung, stellen auch erfindungsgemäße Schritte des Verfahrens dar.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: ein schematisches Blockdiagramm zur Illustration einer Ausführungsform der Erfindung;
- Figur 2: einen Querschnitt eines Antriebsstrangsmoduls mit einem Kurbelwellenstartergenerator;
- Figur 3: ein schematisches Ablaufdiagramm eines Verfahrens gemäß einer Ausführungsform der Erfindung;
- Figur 4: eine perspektivische Ansicht eines Schwungradgehäuses und einer bekannten Durchdrehvorrichtung; und
- Figur 5: eine Querschnittsansicht eines Schwungradgehäuses und einer bekannten Durchdrehvorrichtung.

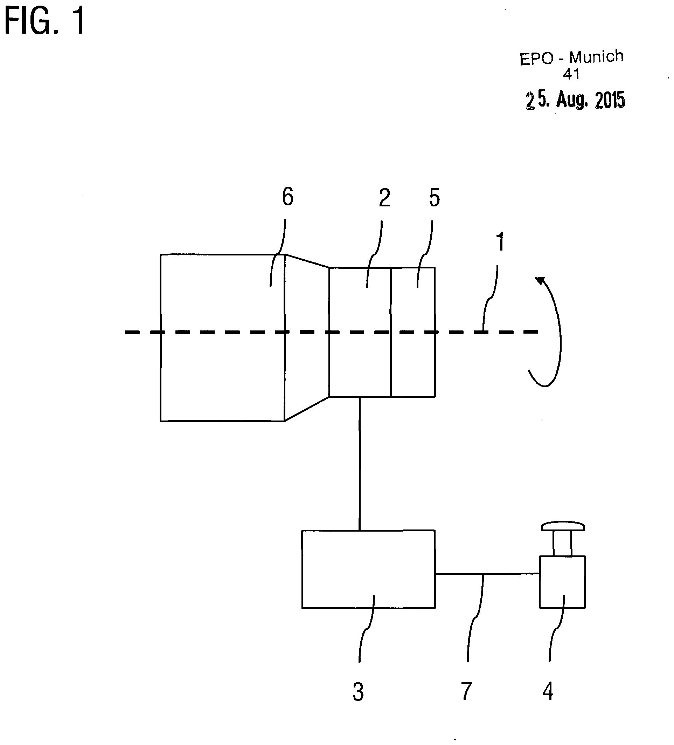

Figur 1 zeigt ein schematisches Blockdiagramm zur Illustration einer Ausführungsform der Erfindung. Ein elektrischer Kurbelwellenstartergenerator (KSG) 2 ist zwischen einem Getriebe 6 und einer Schwungradvorrichtung 5 einer Brennkraftmaschine koaxial zur Kurbelwelle 1 vorgesehen. In Figur 1 ist die Kurbelwelle durch die gestrichelte Linie schematisch dargestellt, die die Mittelachse der Kurbelwelle darstellen soll. Der Rotor des KSGs 2 ist drehfest mit dem Schwungrad der Schwungradvorrichtung 5 verbunden, welches wiederum drehfest mit der Kurbelwelle 1 verbunden ist. Derartige Antriebsstranganordnungen sind an sich aus dem Stand der Technik bekannt.

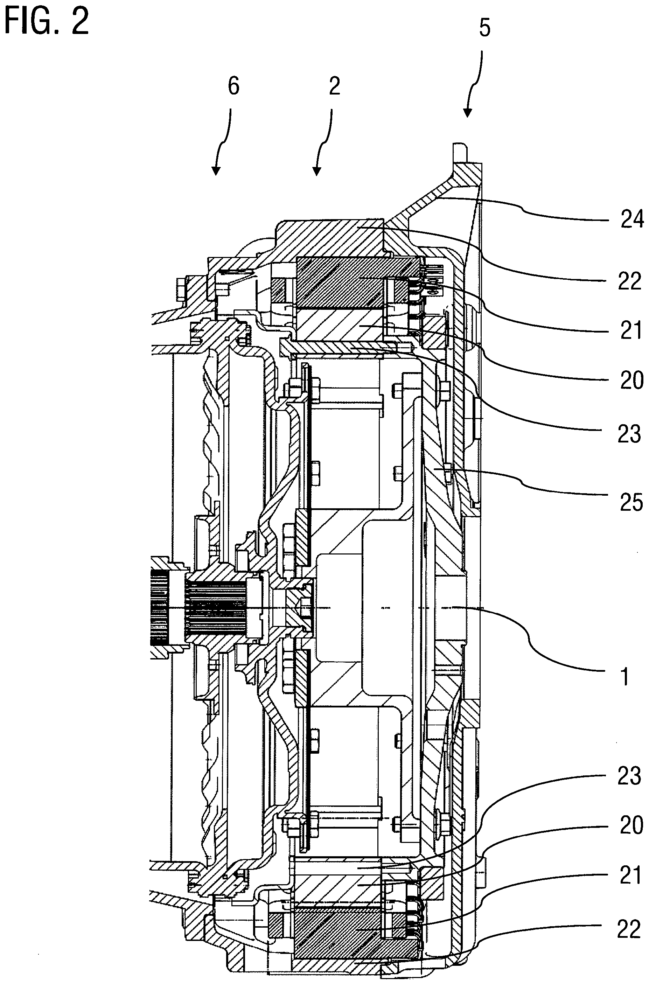

In Figur 2 ist lediglich eine mögliche Variante der konstruktiven Ausgestaltung beispielhaft dargestellt, wobei nachfolgend nur die für die Erfindung relevanten Komponenten kurz erläutert werden. Die Schwungradvorrichtung 5 umfasst ein Schwungrad 25 und ein das Schwungrad 25 motorseitig abdeckendes Schwungradgehäuse 24. Gemäß der in Figur 2 gezeigten Ausführungsvariante ist der Rotor 20 ausschließlich mittels Schrauben 23 am Schwungrad 25 befestigt, so dass das Schwungrad 25 und der Rotor 20 bewegungsgekoppelt sind. Gemäß einer weiteren, nicht gezeigten Variante kann der Rotor 20 auch auf eine Zylindermantelfläche aufgebracht (Passsitz) werden, die am Schwungrad 25 angeformt ist und sich in Axialrichtung der Kurbelwelle 1 erstreckt. Der KSG-Stator 21 ist starr an einem KSG-Gehäuse 22 gehaltert und konzentrisch zum Rotor 20 angeordnet. Das KSG-Gehäuse 22 ist mit dem Schwungradgehäuse 24 verschraubt. Abtriebsseitig ist ein Getriebe 6 über flexible Adapterplatten, sog. Flex-Platten, am Rotor 20 befestigt. Es wird nochmals betont, dass der konstruktive Aufbau in Figur 2 lediglich beispielhaft ist und andere aus dem Stand der Technik bekannte konstruktive Ausgestaltungen eines Antriebsstrangmoduls mit einem KSG ebenfalls verwendet werden können, wenn die Steuerung des KSGs 2 erfindungsgemäß eingerichtet wird, den KSG 2 zum Einstellen einer bestimmten Winkelposition einer Kurbelwelle 1 eines Kraftfahrzeugs im Rahmen von Wartungs- oder Montagearbeiten zu verwenden.

Wie in Figur 1 dargestellt, wird der Betrieb des KSGs 2 von einem Steuergerät 3 gesteuert, das den KSG 2 beispielsweise in an sich bekannter Weise ansteuert, um einen Startvorgang der Brennkraftmaschine durchzuführen.

Gemäß der vorliegenden Erfindung wird die Funktionalität des Steuergeräts 3 erweitert, dahingehend, dass dieses den KSG nicht nur im Fahrbetrieb ansteuern kann, sondern auch zum Einstellen einer bestimmten Winkelposition der Kurbelwelle 1 des Kraftfahrzeugs im Rahmen von Wartungs- oder Montagearbeiten. Hierzu ist am Fahrzeug ferner ein handbetätigtes Steuerelement 4 vorgesehen, vorliegend als Knopf ausgeführt, das über eine Signalleitung 7 mit dem Steuergerät 3 verbunden ist.

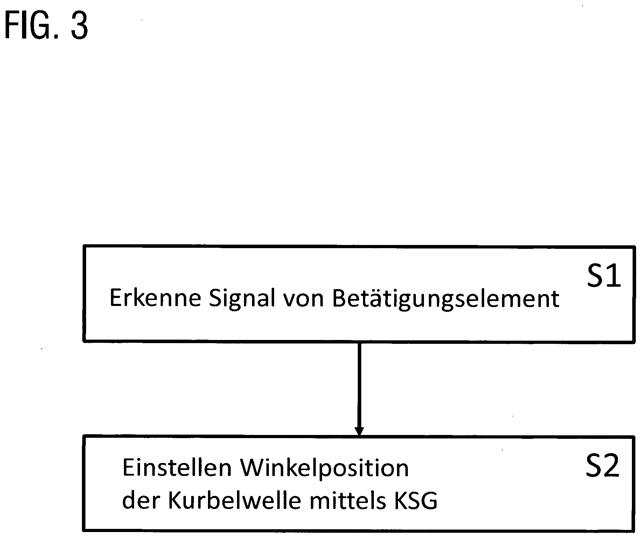

Wie in dem Ablaufdiagramm der Figur 3 dargestellt, ist das Steuergerät 3 eingerichtet, ein Betätigungssignal des Steuerelements 4 zu erfassen (Schritt S1) und in Abhängigkeit von dem erfassten Betätigungssignal den KSG anzusteuern, um den Rotor 20 so lange zu drehen, bis die vom Nutzer gewünschte Winkelposition der Kurbelwelle 1 eingestellt ist (Schritt S2).

Drückt ein Nutzer im Rahmen von Wartungs- oder Montagearbeiten den Knopf 4 und hält diesen gedrückt, ist das Steuergerät 3 programmtechnisch so eingerichtet, dass es in Reaktion des über die Leitung 7 empfangenen Betätigungssignals den Rotor 20 derart bestromt, dass dieser sich gleichmäßig und langsam dreht. Hierbei liegt die Drehzahl unter 10 U/min. Dadurch dreht sich auch die Kurbelwelle mit der gleichen Drehzahl. Lässt der Benutzer den Knopf 4 wieder los, unterbricht das Steuergerät 3 die Bestromung des Rotors 20, so dass der Rotor 20 anhält. In diesem Betriebsmodus kann der Nutzer ein generelles Durchdrehen der Kurbelwelle veranlassen oder manuell eine beliebige Winkelposition der Kurbelwelle anfahren.

Erkennt das Steuergerät 3 anhand des empfangenen Betätigungssignals dagegen, dass der Knopf nur einmal kurz gedrückt und wieder losgelassen wurde, steuert das Steuergerät 3 den KSG 2 so an, dass der Rotor 20 automatisch in eine vorbestimmte Verdrehstellung relativ zum Stator 21 verfährt. Die vorbestimmte Verdrehstellung des Rotors korrespondiert dabei einer vorbestimmten Verdrehstellung, d. h. Winkelposition, der Kurbelwelle 1. Die vorbestimmte Verdrehstellung des Rotors 20 ist in einem Speicher des Steuergeräts 3 hinterlegt. Mittels eines induktiv oder kapazitiv arbeitenden und an sich bekannten Lagegebers (nicht dargestellt) wurde zuvor die aktuelle Verdrehstellung des Rotors 20 zum Stator 21 des KSGs 2 ermittelt. Aus der Praxis ist beispielsweise bekannt, die Erfassung der Verdrehstellung von Rotor zu Stator mittels eines zusätzlichen becherförmigen oder topfförmigen Bauteils (nicht dargestellt) zu ermöglichen, das drehfest am Schwungrad befestigt ist. Auf dem Bauteil ist eine spezielle Geometrie oder Markierung (Geberspur) angebracht, des mittels eines induktiv oder kapazitiv arbeitenden Sensors des Lagegebers abgegriffen wird, um die Verdrehstellung der Geberspur und damit des Rotors 20 zu bestimmen. Das Steuergerät 3 berechnet durch Bildung der Differenz aus vorbestimmter Drehstellung und aktueller Drehstellung die erforderliche Drehung des Rotors 20, um die vorbestimmte Verdrehstellung einzunehmen. Anschließend gibt das Steuergerät ein entsprechendes Stellsignal entsprechend der berechneten Verdrehstellung an den KSG 2 aus, damit der KSG-Rotor 20 sich so lange dreht, bis die erforderliche Drehstellung und damit Winkelposition der Kurbelwelle erreicht ist.

### Bezugszeichenliste

- 1: Kurbelwelle
- 2: Kurbelwellenstartergenerator (KSG)
- 3: KSG-Steuergerät
- 4: Betätigungselement, z. B. Knopf
- 5: Schwungradvorrichtung
- 6: Getriebe
- 7: Signalleitung
- 8: Durchdrehvorrichtung
- 9: Zahnradanordnung
- 9a, 9b, 9c: Zahnrad
- 10: Werkzeugangriffsstelle
- 11: Anlasserzahnkranz
- 12: Werkzeug
- 20: KSG-Rotor
- 21: KSG-Stator
- 22: KSG-Gehäuse
- 23: Schraube
- 24: Schwungradgehäuse
- 25: Schwungrad

## Patentansprüche

1. Vorrichtung zum Einstellen einer bestimmten Winkelposition einer Kurbelwelle (1) eines Kraftfahrzeugs im Rahmen von Wartungs- oder Montagearbeiten, **gekennzeichnet durch** einen Kurbelwellenstartergenerator (2) und eine Steuerung (3) des Kurbelwellenstartergenerators (2), wobei die Steuerung (3) eingerichtet ist, den Kurbelwellenstartergenerator (2) so anzusteuern, dass ein Rotor (20) des Kurbelwellenstartergenerators (2) eine Verdrehstellung einnimmt, die einer vorbestimmten Winkelposition der Kurbelwelle (1) entspricht;
a) wobei die Vorrichtung ein handbetätigtes Steuerelement (4) aufweist, das über eine Signalleitung (7) oder drahtlos mit der Steuerung (3) verbunden ist und mit dem das Einstellen der Winkelposition der Kurbelwelle (1) mittels der Steuerung (3) und des Kurbelwellenstartergenerators (2) gestartet und/oder beendet werden kann; wobei die Steuerung eingerichtet ist, bei einem Gedrückthalten des Steuerelements (4) eine Drehbewegung des Rotors (20) des Kurbelwellenstartergenerators (2) zu erzeugen, solange das handbetätigte Steuerelement (4) gedrückt ist, und bei einem einmaligen kurzen Drücken des handbetätigten Steuerelements (4) den Rotor (20) automatisch in eine vorbestimmte Verdrehposition zu verfahren, die der vorbestimmten Winkelposition der Kurbelwelle (1) entspricht.

2. Vorrichtung nach Anspruch 1, **dadurch gekennzeichnet, dass** die vorbestimmte Winkelposition der Kurbelwelle (1) einem oberen Totpunkt entspricht.

3. Vorrichtung nach einem der vorhergehenden Ansprüche, **dadurch gekennzeichnet, dass** in der Steuerung (3) mehrere vorbestimmte Verdrehpositionen des Rotors (20) hinterlegt sind, die jeweils einer von mehreren vorbestimmten Winkelpositionen der Kurbelwelle (1) entsprechen.

4. Vorrichtung nach einem der vorhergehenden Ansprüche, **dadurch gekennzeichnet, dass** das handbetätigte Steuerelement (4) als Knopf ausgebildet ist.

5. Vorrichtung nach einem der vorhergehenden Ansprüche, **dadurch gekennzeichnet, dass** die Steuerung (3) eingerichtet ist, den Rotor (20) zum Einstellen der vorbestimmten Winkelposition mit einer Drehzahl zu bewegen, die kleiner als 10 U/min ist.

6. Vorrichtung nach einem der vorhergehenden Ansprüche, **dadurch gekennzeichnet, dass** der Rotor (20) zum Einstellen der vorbestimmten Winkelposition durch die Steuerung (3) in beide Drehrichtungen drehbar ist, wobei die Steuerung (3) eingerichtet ist, jeweils diejenige Drehrichtung auszuwählen, die den kürzesten Verdrehweg des Rotors (20) zum Einstellen der vorbestimmten Winkelposition erfordert.

7. Vorrichtung nach einem der vorhergehenden Ansprüche, **dadurch gekennzeichnet, dass** die Steuerung (3) zum Einstellen der vorbestimmten Winkelposition eingerichtet ist, eine aktuelle Verdrehstellung des Rotors (20) zum Stator (21) des Kurbelwellenstartergenerators (2) zu ermitteln und in Abhängigkeit von der aktuellen Verdrehstellung des Rotors (20) eine erforderliche Drehung des Rotors (20) zu bestimmen, mittels der der Rotor (20) ausgehend von der aktuellen Verdrehstellung eine vorbestimmte Verdrehpositionen des Rotors (20), die der vorbestimmten Winkelpositionen der Kurbelwelle entspricht, erreicht.

8. Kraftfahrzeug, vorzugsweise Nutzfahrzeug, mit einer Vorrichtung nach einem der vorhergehenden Ansprüche.

## Claims

1. Device for setting a specific angular position of a crankshaft (1) of a motor vehicle in the context of maintenance or assembly work, **characterised by** a crankshaft starter generator (2) and a controller (3) of the crankshaft starter generator (2), wherein the controller (3) is set up to control the crankshaft starter generator (2) in such a way that a rotor (20) of the crankshaft starter generator (2) assumes a rotational position which corresponds to a predetermined angular position of the crankshaft (1);
a) wherein the device has a manually operated control element (4) which is connected to the controller (3) via a signalling line (7) or wirelessly and with which the setting of the angular position of the crankshaft (1) can be started and/or stopped by means of the controller (3) and the crankshaft starter generator (2); wherein the controller is arranged to generate a rotary movement of the rotor (20) of the crankshaft starter generator (2) when the control element (4) is held depressed as long as the manually actuated control element (4) is depressed, and to automatically move the rotor (20) into a predetermined rotational position which corresponds to the predetermined angular position of the crankshaft (1) when the manually actuated control element (4) is briefly depressed once.

2. Device according to claim 1, **characterised in that** the predetermined angular position of the crankshaft (1) corresponds to a top dead centre.

3. Device according to one of the preceding claims, **characterised in that** a plurality of predetermined rotational positions of the rotor (20) are stored in the controller (3), each of which corresponds to one of a plurality of predetermined angular positions of the crankshaft (1).

4. Device according to one of the preceding claims, **characterised in that** the manually operated control element (4) is designed as a button.

5. Device according to one of the preceding claims, **characterised in that** the control (3) is set up to move the rotor (20) for setting the predetermined angular position at a speed which is less than 10 rpm.

6. Device according to one of the preceding claims, **characterised in that** the rotor (20) can be rotated in both directions of rotation by the controller (3) in order to set the predetermined angular position, the controller (3) being set up to select the direction of rotation which requires the shortest rotational path of the rotor (20) in order to set the predetermined angular position.

7. Device according to one of the preceding claims, **characterised in that** the controller (3) for setting the predetermined angular position is set up to determine a current rotational position of the rotor (20) relative to the stator (21) of the crankshaft starter generator (2) and to determine a required rotation of the rotor (20) as a function of the current rotational position of the rotor (20), by means of which the rotor (20), starting from the current rotational position, reaches a predetermined rotational position of the rotor (20), which corresponds to the predetermined angular position of the crankshaft.

8. Motor vehicle, preferably a commercial vehicle, with a device according to one of the preceding claims.

## Revendications

1. Dispositif permettant de régler une position angulaire déterminée d'un vilebrequin (1) d'un véhicule automobile dans le cadre de travaux d'entretien ou de montage,
**caractérisé par** un alterno-démarreur de vilebrequin (2) et un dispositif de commande (3) de l'alterno-démarreur de vilebrequin (2), dans lequel le dispositif de commande (3) est conçu pour piloter l'alterno-démarreur de vilebrequin (2) de telle sorte qu'un rotor (20) de l'alterno-démarreur de vilebrequin (2) occupe une position de rotation qui correspond à une position angulaire prédéterminée du vilebrequin (1) ;
a) dans lequel le dispositif présente un élément de commande (4) à actionnement manuel qui est relié au dispositif de commande (3) par l'intermédiaire d'une ligne de signal (7) ou sans fil et qui permet de démarrer et/ou de terminer le réglage de la position angulaire du vilebrequin (1) au moyen du dispositif de commande (3) et de l'alterno-démarreur de vilebrequin (2) ; dans lequel, lorsque l'élément de commande (4) est maintenu enfoncé, le dispositif de commande est conçu pour générer un mouvement de rotation du rotor (20) de l'alterno-démarreur de vilebrequin (2) tant que l'élément de commande (4) à actionnement manuel est maintenu enfoncé, et en cas de pression brève unique de l'élément de commande (4) à actionnement manuel, pour déplacer le rotor (20) automatiquement dans une position de rotation prédéterminée qui correspond à la position angulaire prédéterminée du vilebrequin (1).

2. Dispositif selon la revendication 1, **caractérisé en ce que** la position angulaire prédéterminée du vilebrequin (1) correspond à un point mort haut.

3. Dispositif selon l'une quelconque des revendications précédentes, **caractérisé en ce que** plusieurs positions de rotation prédéterminées du rotor (20) sont sauvegardées dans le dispositif de commande (3) qui correspondent respectivement à l'une de plusieurs positions angulaires prédéterminées du vilebrequin (1).

4. Dispositif selon l'une quelconque des revendications précédentes, **caractérisé en ce que** l'élément de commande (4) à actionnement manuel est réalisé sous forme de bouton.

5. Dispositif selon l'une quelconque des revendications précédentes, **caractérisé en ce que** le dispositif de commande (3) est conçu pour déplacer le rotor (20) pour le réglage de la position angulaire prédéterminée à une vitesse de rotation qui est inférieure à 10 t/min.

6. Dispositif selon l'une quelconque des revendications précédentes, **caractérisé en ce que** pour le réglage de la position angulaire prédéterminée, le rotor (20) peut être amené à tourner par le dispositif de commande (3) dans les deux sens de rotation, le dispositif de commande (3) étant conçu pour sélectionner respectivement le sens de rotation qui nécessite le trajet de rotation le plus court du rotor (20) pour le réglage de la position angulaire prédéterminée.

7. Dispositif selon l'une quelconque des revendications précédentes, **caractérisé en ce que** pour le réglage de la position angulaire prédéterminée, le dispositif de commande (3) est conçu pour établir une position de rotation actuelle du rotor (20) par rapport au stator (21) de l'alterno-démarreur de vilebrequin (2) et pour déterminer en fonction de la position de rotation actuelle du rotor (20) une rotation nécessaire du rotor (20) au moyen de laquelle le rotor (20), en partant de la position de rotation actuelle, atteint une position de rotation prédéterminée du rotor (20) qui correspond à la position angulaire prédéterminée du vilebrequin.

8. Véhicule automobile, en particulier véhicule utilitaire, comprenant un dispositif selon l'une quelconque des revendications précédentes.
